(19) **Europäisches Patentamt**
**European Patent Office**
**Office européen des brevets**

(11) **EP 1 729 256 B1**

(12) **EUROPEAN PATENT SPECIFICATION**

(45) Date of publication and mention
of the grant of the patent:
**07.03.2018 Bulletin 2018/10**

(51) Int Cl.:
***G06T 3/40*** *(2006.01)*

(21) Application number: **05011637.5**

(22) Date of filing: **30.05.2005**

(54) **Image processor**

Bildverarbeitungvorrichtung

Processeur d'images

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**06.12.2006 Bulletin 2006/49**

(73) Proprietor: **Harman Becker Automotive Systems
GmbH
76307 Karlsbad (DE)**

(72) Inventors:
 • **Frensch, Jochen
 78052 Villingen-Schwenningen (DE)**
 • **Bühler, Karl
 78073 Bad Dürrheim (DE)**

(74) Representative: **Grünecker Patent- und
Rechtsanwälte
PartG mbB
Leopoldstraße 4
80802 München (DE)**

(56) References cited:
 **EP-A- 0 952 546          US-A- 4 692 880
 US-A1- 2002 122 036**

Remarks:
The file contains technical information submitted after
the application was filed and not included in this
specification

**Description**

The present invention relates to an image processor capable of generating a blended image from a plurality of image layers. Specifically, the present invention relates to an image processing apparatus capable of performing alpha-blending, i.e. blending two or more image layers in accordance with an alpha layer specifying a transparency of image areas of one of the image layers.

Nowadays, vehicle information and entertainment systems and consumer entertainment devices which employ sophisticated graphical schemes are widely in use. Preferably, a vehicle information and entertainment system simultaneously displays car navigation data, like maps with route information overlaid thereon and direction indicator arrows, and further, auxiliary video information and image elements of a graphical user interface.

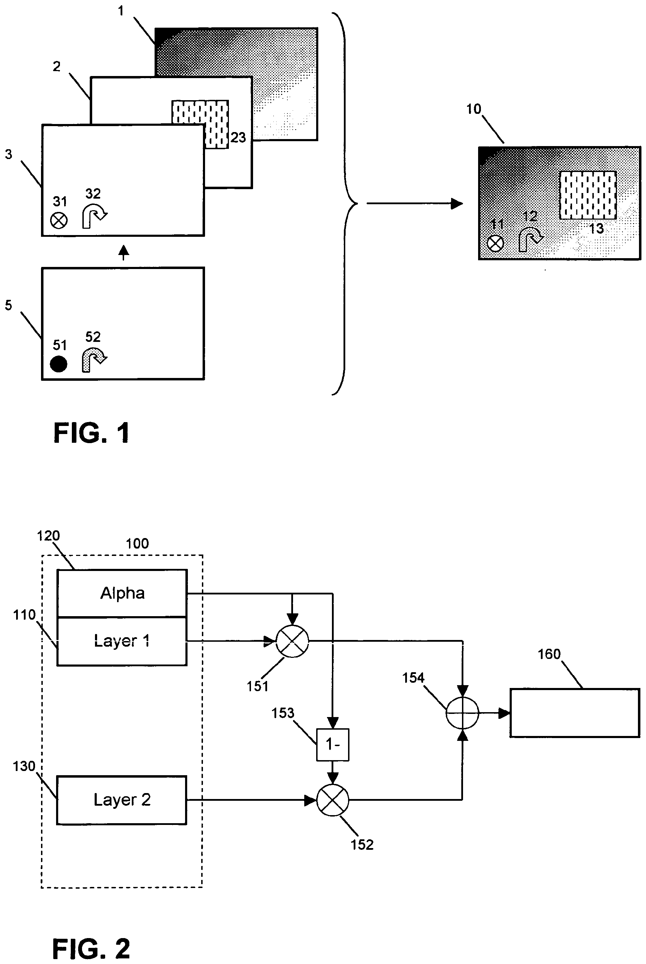

Fig. 1 depicts an example for the generation of a blended image from plural image layers. Blended image 10, in this example, includes a plurality of different image elements 11, 12, 13 visible against a background image. Blended image 10 is formed from image data of plural image layers. An image layer 1 is used as a background image, on image layer 2 an image element 23 is stored and image layer 3 holds image elements 31 and 32. Preferably, in addition to the image layers 1, 2 and 3, an $\alpha$-layer is provided. This $\alpha$-layer is associated with image layer 3, in order to assign a transparency value to image elements 31 and 32.

A common image blending - or overlay - technique is the so-called chroma-keying. In accordance with this technique, a specific color of an image is selected to be replaced by another (background) image. In this example, the image layers 1 and 2 are overlaid using chroma-keying. Specifically, all image areas of image layer 2, except for the image area of image element 23, have a uniform color. This color is set as a transparent color, such that a combined image of image layers 1 and 2 would show image element 23 before the background image being stored on image layer 1.

A more sophisticated image blending technique is the so-called $\alpha$-blending. In accordance therewith, an image layer is provided with an $\alpha$-layer indicating - preferably for each pixel - a transparency of the image. Thus, it becomes possible to semi-transparently overlay image elements on a background image. In this example, $\alpha$-layer 5 is associated with image layer 3. For image element 31, a corresponding $\alpha$-layer element 51 specifies image element 31 to be opaque. Image element 31 is determined by $\alpha$-layer element 52 to be semi-transparent. The remaining area of image layer 3 is specified to be completely transparent. Thus, image element 11 in blended image 10 (corresponding to image element 31) is displayed completely opaque in front of the background image, while image element 12 (corresponding to image element 32) is visible in a semi-transparent manner in front of the background image.

$\alpha$-blending may be also employed for creating dynamic image effects such as a fade-in/fade-out of image elements. Preferably, such effects are applied to elements of a graphical user interface to give the graphical user interface a more sophisticated appearance.

Conventional vehicle information and entertainment systems and consumer entertainment devices typically employ complex graphic controllers. These graphic controllers generate an image to be displayed from a plurality of image layers. This layered concept allows to independently control different image elements of a complex blended image. For instance, in the case of above-mentioned vehicle information and entertainment system, computer generated images, such as maps, additional video data, direction indicator arrows and elements of a graphical user interface are supplied in form of different image layers and blended in order to be displayed on a single on-vehicle display screen.

Such a conventional design of a vehicle information and entertainment system relies on commercially available graphic controllers. A drawback of such a design is that sophisticated graphic controllers which are capable of performing image overlay and blending processing are rather expensive. Further, such graphic controllers are usually designed as a general-purpose device in order to fulfill the requirements of a wide variety of graphic applications. However, a specific application may use only a fraction of the provided functionalities. Such graphic applications which mainly employ an overlay and blending functionality utilize a general-purpose graphic controllers in an inefficient manner. In addition, the conventional technique of performing image blending requires a large amount of data to be transferred to the graphic controllers. In order to compute the blended image, the pixel data of two image layers is transmitted together with corresponding $\alpha$-layer data for each pixel of the image data.

EP-A-0 952 546 shows how to obtain a blending effect by a special output sequence of image data based on corresponding $\alpha$-layer information. Based on an $\alpha$-layer value, either foreground or background pixel data is output. An effect of blended image data without calculating a blended pixel value is achieved by alternating output of foreground and background pixels.

In view of these drawbacks, the present invention aims to provide a graphic processing scheme of improved efficiency, in particular being capable of performing image blending. This is achieved by the features of independent claims.

It is the particular approach of the present invention that only the image data is transmitted to the image processor, while the $\alpha$-layer data is used to select a particular input memory of the image processor. The blending information itself, i.e. the $\alpha$-layer data, is not provided to the processor. The specific image blending processing to be carried out depends on the individual input memory of the processor used for supplying the pixel data.

Due to this particular approach, the amount of data transmitted to an image processor carrying out blending processing is reduced in comparison to a conventional design. Accordingly, the blending processing is efficiently controlled. Preferably, the number of the memories for storing pixel data to be processed by the processor corresponds to the number of possible values of the $\alpha$-layer data. In accordance therewith, the processor is instructed to perform a different processing in accordance with each different transparency value, while transmitting only pixel data of the image layers to be blended to the processor.

According to a preferred embodiment of the present invention, a data bus is provided between the memories and the selector in order to transmit the data to the memories. In particular, a multi-purpose data bus of a system wherein the graphic processing scheme of the present invention is employed may be utilized to connect the different control/processing means performing the image processing.

Preferably, the data bus has a width corresponding to the data amount of the two pixels to be processed. Thus, the two pixels to be blended are transmitted in a single bus cycle so that the data bus transport capacity is utilized at optimum efficiency.

According to a preferred embodiment, the data bus has a width of 32 bit. Such a bus is compatible with standard controllers which are widely commercially available.

Preferably, data of each pixel are composed of a green color value of 6 bit, a red color value and a blue color value of 5 bit each. This representation of the image data offers a satisfactory image quality while requiring only a low amount of data to be stored or transmitted.

According to another embodiment of the present invention, the processor is provided with a single storage means subdivided into blocks representing the memories to which pixel data is output. By employing a storage means, different memories to receive the data to be processed are implemented in a simple and efficient manner.

Preferably the selector comprises a controller for outputting the pixel data to a specific address of the storage means selected in accordance with the $\alpha$-layer data. Due to this feature, the operation of the selector - outputting data to be processed to different memories - is simplified.

According to another preferred embodiment of the present invention, the processor is configured to apply a different processing to pixel data stored at different addresses of the storage means. Thus, the processor efficiently determines the specific processing applied to the transmitted data.

Preferably, the storage means further comprises a result buffer holding the computed blended pixel data. Accordingly, further processing of the blended pixel data can be carried out by another controller/processor.

The result buffer is preferably provided with a storage capacity corresponding to the data amount of a single blended pixel.

According to a preferred embodiment of the present invention, the processor is implemented as a programmable logic device, in particular a field programmable gate array. In this way, a customized processor for carrying out the image blending computation is efficiently implemented.

Preferably, the $\alpha$-layer comprises a transparency data value for each pixel of one of the two image layers.

Each transparency data value is preferably represented by a 4 bit data value. Accordingly, the transparency may be controlled in 16 steps between opacity and full transparency. However, the present invention is also advantageously applicable to systems employing 2 bits to 8 bits transparency values.

According to a preferred embodiment of the present invention, the processor is configured to process the pixel data in accordance with a processing parameter varying in accordance with the different memories. In this manner, processing is carried out in accordance with a processing parameter, which is not transmitted as a data value, but expressed by the selection of a specific memory. Accordingly, the processing operation is efficiently controlled by transmitting only the pixel data to be blended. Further, the configuration of the processor is simplified in that the different processing to be carried out includes essentially the same computation in which only a parameter, such as a transparency value, is changed.

According to another preferred embodiment, a vehicle information and entertainment system is provided with a display and an image processing apparatus in accordance with the present invention. In this way, a vehicle information and entertainment system can be manufactured in a cost efficient manner.

Preferably, the vehicle information and entertainment system is further equipped with a microcontroller for controlling the information and entertainment system and a program storage storing a software executable on the microcontroller for implementing the selector. Thus, the system efficiency is further increased in that a microcontroller controlling the system employs remaining processing resources in order to control the graphic processing.

Further embodiments are subject-matter of dependent claims.

The present invention is now described in detail while referring to the following Figures, in which:

Fig. 1    is a schematic representation of an image blending technique wherein a blended image is generated from plural image layers and a transparency ($\alpha$-) layer,

Fig. 2    is a schematic illustration of a computation required for performing the $\alpha$-blending technique,

Fig. 3    depicts a basic configuration of an image processing system in accordance with the present invention,

Fig.4 is a schematic configuration of an image processing apparatus in accordance with the present invention wherein image data to be blended is transmitted from a selector to different memories to be processed differently by a processor,

Fig. 5 illustrates a schematic system configuration of a vehicle information and entertainment system or a consumer entertainment device in accordance with the present invention, and

Fig. 6 is a flow-chart depicting a method for blending image layers in accordance with the present invention.

In the following, a detailed description of the present invention is given while making reference to the Figures.

Fig. 2 is a schematic illustration of the image processing employed in the $\alpha$-blending technique. A memory 100 supplies the image processing apparatus with a first image layer 110, a second image layer 130 and an $\alpha$-layer 120 being associated with the first image layer 110. In a preferred configuration, memory 100 stores the image data as RGB data. In such a case, a color value of a blended image 160 is calculated from respective color values of the image layers 110 and 130 in accordance with the following equation:

$$R_{1/2} = \alpha \times R_1 + (1 - \alpha) \times R_2 \qquad \text{Equation A}$$

In the above equation, $R_{1/2}$ represents the red color value of a pixel of the blended image 160, $R_1$ the red color value of a corresponding pixel of image layer 110, and $R_2$ the red color value of a corresponding pixel of image layer 130. $\alpha$ is a transparency value of the $\alpha$-layer 120 indicating the blending operation to be applied to the pixel data $R_1$ and $R_2$. The above equation applies to $\alpha$ values between (and including) 0 and 1. The $\alpha$ values of 0 and 1 express full transparency and full opacity, respectively, of image layer 110 with respect to the corresponding pixel data of image layer 130.

This calculation is correspondingly performed for each color value R, G, B and for each pixel of blended image 160. The arithmetic processing elements 151, 152, 153 and 154 of Fig. 2 symbolize the multiplications, subtractions and additions, respectively, performed by the image processing apparatus in order to execute the above specified calculation.

Equation A is applicable to images stored in accordance with the RGB color coding standard. However, the present invention is not limited to the processing of RGB images. The skilled person is aware that any other color coding system, such as YUV, etc., may be applied in a similar manner by using an equation equivalent to equation A.

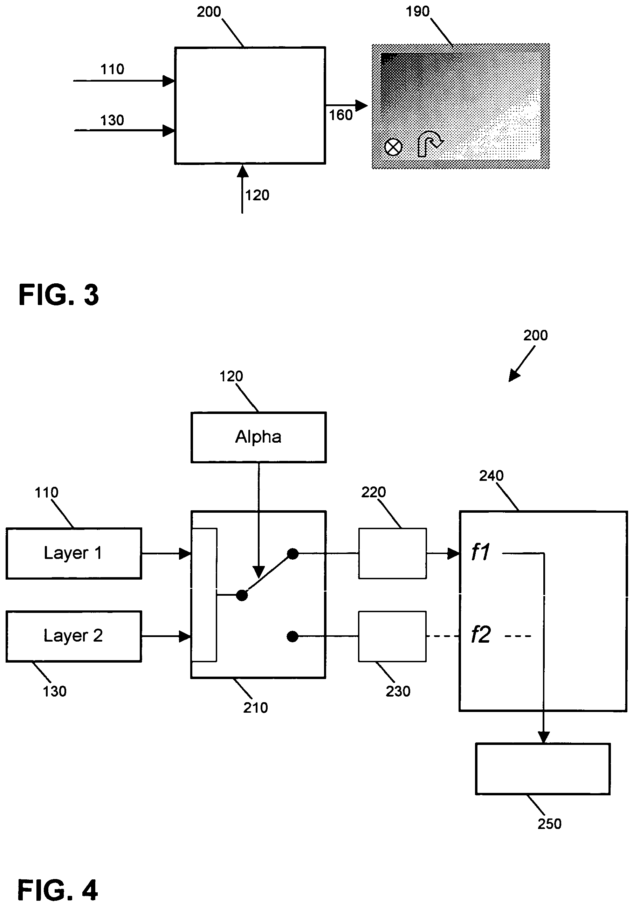

Fig. 3 depicts a basic configuration of an image processing apparatus 200 in accordance with the present invention, capable of performing image blending as described with reference to Fig. 2. The image processing apparatus 200 displays a blended image 160 on a display screen 190. For this purpose, image processing apparatus 200 is provided with data of plural image layers 110, 130 to be blended in accordance with data 120 of an $\alpha$-layer. Alternatively, data of at least one image layer and $\alpha$-layer data is generated by image processing apparatus 200, for instance as part of a graphical user interface.

Fig. 4 illustrates the structure of an image processing apparatus 200 in accordance with the present invention. The apparatus obtains pixel data of at least two image layers 110, 130 to be blended and computes data of a blended pixel 250 in accordance with $\alpha$-layer data 120 indicating the transparency of each pixel of one of the layers, for instance image layer 110.

Corresponding pixels of the two image layers are supplied to a selector which outputs the data of the two pixels to one of a plurality of different memories 220, 230. The selection of the memory is carried out in accordance with data of $\alpha$-layer 120.

In Fig. 4, two memories which can be selected to receive pixel data are depicted. However, the present invention may be provided with a larger number of memories selectable for receiving the pixel data wherein each of the memories serves for providing a different blending operation. Preferably, the number of memories corresponds to the number of possible values of the $\alpha$-layer data, such that for each different value of $\alpha$, a different memory is selected by selector 210.

The data stored in one of the memories 220, 230 is processed by a processor 240 which applies different processing operations f1, f2, ... to the data stored in the different memories 220, 230. In particular, a different blending operation is assigned to each of the memories in advance, wherein the pre-assigned blending operation is to be applied to the data stored in the respective memory. The processing result is output as blended pixel value 250.

Preferably, the processor 240 only processes the data of the memory to which selector 210 has output pixel data. According to a preferred implementation, the memories are reset to an initial value and the data of the memory which holds data different from the initial value is processed. Alternatively, processor 240 is notified to which of the memories a write access is performed by, for instance, a memory controller.

As becomes apparent from this structure, only the data of the two pixels to be blended from the two image layers 110, 130 is transmitted from the selector to the processor via memories 220, 230. Accordingly, the amount of data which is provided to processor 240 is reduced in that only the pixel data itself is transmitted. Consequently, the amount of data transmitted to a processor carrying out blending processing is reduced in comparison to the conventional system design.

By employing this structure, remaining processing resources of, for instance, a system controller can be employed for controlling the graphic processing, while the image blending computation is implemented in a customized processor. In this manner, a cost efficient system configuration is provided.

Preferably, memories 220, 230 only have a storage capacity corresponding to the data amount of the pixels to be blended. Specifically, for blending pixels of two image layers, the storage capacity of each memory corresponds to a data amount of two pixels. The data amount of the computation result of the processor 240 corresponds to a single pixel.

The $\alpha$-layer data is preferably represented by data values of 4 bits. Accordingly, the transparency is defined in 1/16-steps. However, the present invention is not limited to a 4 bit representation of $\alpha$ values. The skilled person is aware that any other $\alpha$ value resolution can be employed. For instance, the transparency may be defined in a more coarse or in a finer manner. For instance, transparency values represented by 2, 3 or up to 8 bit data values may be used.

In accordance with a preferred configuration of the present invention, the processor 240 performs basically the same computation on the data stored in any of the memories 220, 230 wherein only a processing parameter is varied in accordance with the different memories. The parameter preferable corresponds to the $\alpha$-layer data.

In particular, when the $\alpha$-layer data is represented by 4 bit data values, $\alpha$ may take a value between 0 and 15. The selector outputs the pixel data to be blended to one of 16 different memories. The processor is configured to carry out the following computation in order to obtain red, green and blue data values of the pixels to be blended:

$$R_{1/2} = (\alpha \times R_1 + (1 - \alpha) \times R_2) / 15 \qquad\qquad \textit{Equation B1}$$

$$G_{1/2} = (\alpha \times G_1 + (1 - \alpha) \times G_2) / 15 \qquad\qquad \textit{Equation B2}$$

$$B_{1/2} = (\alpha \times B_1 + (1 - \alpha) \times B_2) / 15 \qquad\qquad \textit{Equation B3}$$

In these equations, $R_1$, $R_2$, $G_1$, $G_2$, $B_1$, $B_2$ represent the color data of two corresponding pixels from layer 1 and layer 2 to be blended. $R_{1/2}$, $G_{1/2}$, $B_{1/2}$, represent the color data of the blended pixel, being the computation result of above equations.

The computation parameter $\alpha$ is determined in accordance with the memory to which the pixel data to be blended has been written. $\alpha$ is determined in a particularly efficient manner by assigning a value between zero and fifteen to each of the memories.

Alternatively, the parameter $\alpha$ determined by the processor corresponds to converted data of the $\alpha$-layer supplied to the selector. The conversion may relate to an inversion or to a conversion of the bit width of the $\alpha$-values.

According to an exemplary configuration of the present invention, each of the red and blue data values is represented by a 5 bit data value. Each green data value is represented by a 6 bit data value, such that the red and blue data value take a value between 0 and 31, whereas the green data value takes a value between 0 and 63. Thus, the image data of a pixel only requires 16 bit of storage capacity. Further, this image data representation already provides a near natural viewing impression and takes the higher sensitivity of the human eye in the green spectral range into account.

By representing each pixel by a data amount of 16 bit, two pixels to be blended are transmitted on a 32 bit data bus in a single bus cycle. Thus, the transport capacity of the bus is utilized in an efficient manner. It is also possible to use other representations of the pixel data in combination with different bus widths. As long as the data bus width corresponds to the image data amount of the pixels to be processed, a very efficient transport of data to processor 240 is achieved.

A data bus having a bus width of 32 bit is nowadays frequently employed in vehicle information and entertainment systems and consumer entertainment devices. By employing an already existing data bus for the transmission of data between the selector and the memories, the image processing apparatus of the present invention is implemented at high efficiency without increasing the system complexity.

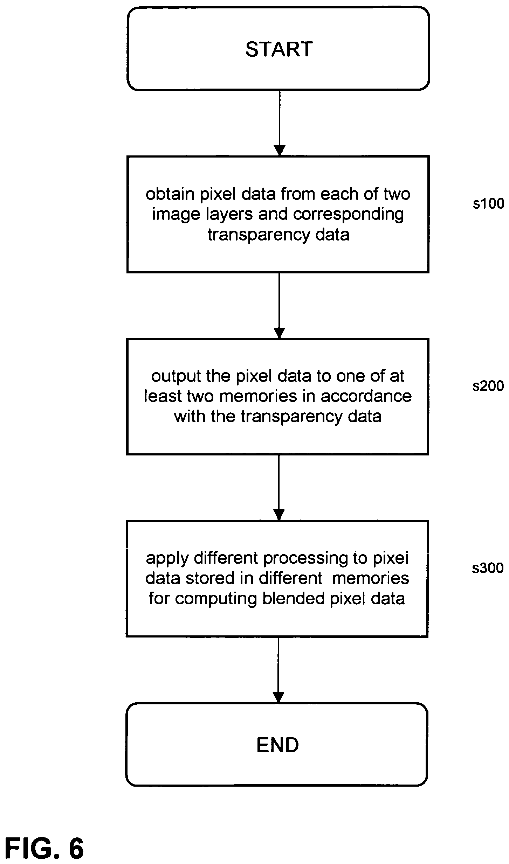

In the following, the operation of the image processing apparatus of the present invention is described while referring to Fig. 6. In a first step s100, pixel data of corresponding pixels of each of the two image layers is obtained. Further, transparency data of an $\alpha$-layer corresponding to the respective pixels is acquired. In a next step s200, the pixel data of the two pixels to be subjected to blending processing is output to one of plural memories in accordance with the transparency data. In step s300, a blended pixel data is computed from the data stored in one of the memories wherein a different processing is applied to a pixel data stored in different memories.

Accordingly, only the pixel data to be processed needs to be transmitted to the memories. The specific processing to be applied to the image layer data is determined by the selection of a particular memory.

Preferably, by selecting a specific memory, a processing parameter controlling the processing is determined.

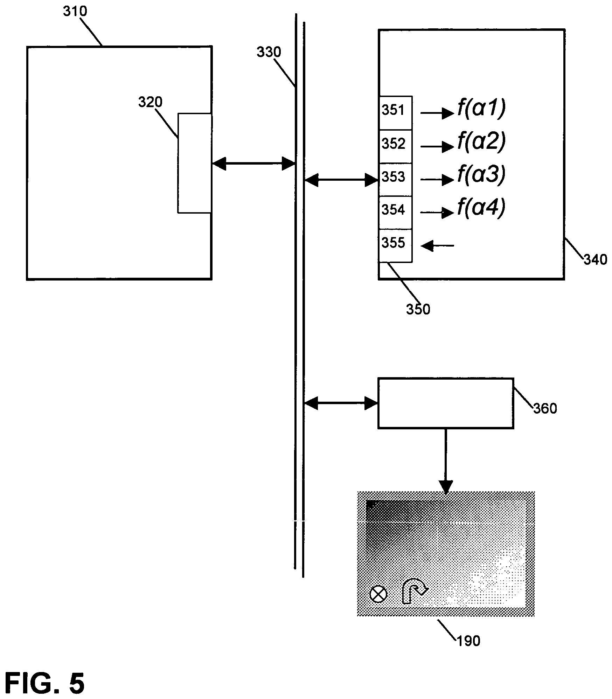

In the following, an implementation of a vehicle information and entertainment system or a consumer entertainment device employing an image processing apparatus in accordance with the present invention is described. For this purpose, reference is made to Fig. 5 which depicts a basic system configuration of a vehicle information and entertainment system or a consumer entertainment device. In the following, reference is only made to a vehicle information and entertainment system in order to provide a concise description. However, the same considerations also apply to a consumer entertainment device.

The vehicle information and entertainment system depicted in Fig. 5, is provided with a main microcontroller 310 for controlling the operation of the system. The microcontroller is connected to a data bus 330 which enables communication between all devices of the system. The main microcontroller is equipped with a bus interface 320 in order to control the transmission of data to and from the data bus 330.

Microcontroller 310 is preferably implemented as a processor carrying out a control program in accordance with program information stored in an internal or external memory (not shown).

The vehicle information entertainment system is further provided with a display 190 and a display controller 360 driving the display. According to the depicted configuration, display controller 360 receives data to be displayed via the data bus 330. Alternatively, the display controller is directly connected to the microcontroller 310.

In accordance with the present invention, preferably a rather simple and cost efficient display controller 360 is utilized providing the basic display driving functionalities. More sophisticated graphic functionalities such as image overlay and alpha-blending are carried out by the main microcontroller 310.

However, implementing the computation of the image blending as described above in equations B1, B2, and B3 in a software program running on microcontroller 310 would result in a high computation load of main microcontroller 310. The microcontrollers usually utilized in vehicle information and entertainment systems are not capable of handling such computations in addition to controlling the operation of the vehicle information and entertainment system. In particular, a software implementation for computing the blended pixel values requires about one-hundred processing cycles for the calculation of each blended pixel.

In order to perform image blending without unduly increasing the processing load of the microcontroller 310, an additional processor 340 is provided which performs the computation of the blended image data. This processor is provided with a memory 350 employed as register for storing data and operation parameters. This memory is accessed by external devices via data bus 330. In this implementation of the present invention, blocks 351 to 354 of memory 350 act as memories for receiving the pixel data to be processed. The blended pixel data computed by processor 340 is stored in block 355 of the memory 350.

In accordance with the present invention, a selector which obtains the image data to be blended is implemented in the software running on microcontroller 310. The microcontroller acquires pixel data of corresponding pixels of two image layers from a storage (not shown) together with $\alpha$-layer data. In accordance with the $\alpha$-layer data, the microcontroller stores the pixel data to be blended at a specific address of memory 350 via data bus 330. The address specifies a memory block 351 to 354 of memory 350.

In particular, microcontroller 310 determines an address for outputting the pixel data by adding an offset value to a basis address of the memory 350. The offset corresponds to the data value obtained from the $\alpha$-layer. Referring to the above described example wherein a 4 bit $\alpha$-value has been employed, an offset between zero and fifteen is added to the basis address. Accordingly, the pixel data to be processed is written to sixteen different blocks 351 to 354 (only four shown) of memory 350.

Upon completion of the write operation to memory 350, processor 340 carries out a predetermined processing on the written data. In accordance with the address to which the data has been written, one of different processing functions $f(\alpha1)$ to $f(\alpha4)$ ..., each pre-assigned to a specific memory address, is applied to the pixel data stored in the respective block of memory 350.

Although only four memory blocks corresponding to four addresses and four different computation functions are depicted in Fig. 5, the number of different memory blocks of memory 350, addressable under separate addresses and the number of different processing functions $f(...)$ is arranged to correspond to the number of possible $\alpha$-values. When employing 4 bit $\alpha$-values, sixteen memory blocks are provided for receiving the data to be processed and sixteen different computation functions $f(\alpha1)$ to $f(\alpha16)$ corresponding to the sixteen different memory blocks are implemented.

As can be seen from the equations B1 to B3 which are applied by processor 340, the processing functions only differ in the value of the parameter $\alpha$. This parameter $\alpha$ is easily determined by the offset from the basis address of memory 350 to which the data to be processed has been stored. Accordingly, only the pixel data is transmitted via data bus 330 in order to effect a control of the processing to be carried out by a processor 340. Thus, the bandwidth of data bus 330 is efficiently used. As already described, preferably the bit width of data bus 330 corresponds to the data amount of pixel data of two pixels to be blended.

After performing the image blending computation, processor 340 writes the computation result to another address of memory 350 serving as an output buffer. The computation result stored in output buffer 355 corresponds to the blended image data. The blended pixel data is read by microcontroller 310 to be subjected to further processing or to be supplied to display driver 360. Accordingly, a blended image is output on display 190. Alternatively, the blended pixel data is directly transmitted from output buffer 355 to display driver 360.

Preferably the output buffer has a storage capacity corresponding to a single pixel. According to a specific implementation, the data amount of a pixel corresponds to 16 bit.

In accordance with the present invention, an already existing data bus of the vehicle information and entertainment system is utilized for supplying data to be processed to an auxiliary processor 340.

By transmitting only the data to be processed, the data bus is utilized at optimum efficiency. A parameter indicating the transparency of an image layer is conveyed by the selection of a storage address such that this parameter does not have to be transmitted in addition to the pixel data.

Processor 340 is optimized to carry out the image blending processing in accordance with equations B1 to B3 in a very time efficient manner, preferably requiring only a time period between a write cycle and a subsequent read cycle of the main microcontroller. Accordingly, instead of computing equations B1 to B3, microcontroller 310 only performs a write operation and a subsequent read operation of pixel data to be blended and the blended pixel data, respectively.

A preferred implementation of processor 340 is a programmable logic device, such as a field programmable gate array (FPGA). The skilled person will easily implement the above described image blending computation in a field programmable gate array in a manner requiring only a few processing cycles. Therefore, a field programmable gate array allows to implement the $\alpha$-blending computation in a very cost efficient manner.

In addition, the field programmable gate array may be configured to carry out other control/computation tasks, not necessarily related to image processing, such that a plurality of different functionalities including the $\alpha$-blending computation are implemented in a single device.

In accordance with the present invention, a very costs efficient vehicle information and entertainment system is provided which is capable of performing sophisticated graphic functionalities such as image blending. According to a particular embodiment, this is achieved by utilizing a simple display driver and carrying out the image blending computation on a programmable logic device. Alternatively, the processor carrying out the image blending is integrated with the display driver. The controlling of the programmable logic device is performed by the main microcontroller of the vehicle information and entertainment system. The pixel data to be blended is transmitted via the system data bus 330 in a very efficient manner.

Summarizing, the present invention provides an image processing apparatus for computing blended pixel data from pixel data of two image layers in accordance with $\alpha$-layer data. The $\alpha$-layer data indicates a transparency of one of the image layers. The image processing apparatus is provided with at least two memories, each capable of storing data of two pixels, and a processor configured to apply a different processing to pixel data stored in the different memories in order to compute the blended pixel data. Further provided is a selector for obtaining data of a pixel of each of the image layers and data of the $\alpha$-layer and outputting the pixel data to one of the at least two memories in accordance with the $\alpha$-layer data.

The present invention further provides an image processing method for computing blended pixel data from pixel data of two image layers in accordance with $\alpha$-layer data indicating a transparency of one of the image layers. The method comprises the steps of obtaining data of a pixel of each of the image layers and data of the $\alpha$-layer, and outputting the pixel data to one of at least two memories in accordance with the $\alpha$-layer data. The memories each have a storage capacity for data of two pixels. Further, the step of applying a different processing to pixel data stored in different memories is provided in order to compute the blended pixel data.

It is the particular approach of the present invention that only the image data is transmitted to the image processor, while the $\alpha$-layer data is used to select a particular input memory of the image processor. The blending information itself, i.e. the $\alpha$-layer data, is not provided to the processor. The specific image blending processing to be carried out depends on the individual input memory of the processor used for supplying the pixel data.

Due to this particular approach, the amount of data transmitted to an image processor carrying out blending processing is reduced in comparison to a conventional design. Accordingly, the blending processing is efficiently controlled.

**Claims**

1. Image processing apparatus for computing blended pixel data from pixel data of two image layers (110, 130) in accordance with $\alpha$-layer data (120), said $\alpha$-layer data (120) indicating a transparency of one of said image layers (110, 130), comprising:

at least two memories (220, 230), and
a processor (240) configured to apply a different blending processing to pixel data stored in said different memories (220, 230) for computing said blended pixel data,
**characterized by**
a selector (210) for obtaining data of a pixel of each of said image layers (110, 130) and data of said $\alpha$-layer (120) and outputting said obtained pixel data to one of said at least two memories (220, 230) in accordance with said $\alpha$-layer data (120)such that for each different data of said $\alpha$-layer a different memory (220, 230) is selected, and in that
the processor (240) is configured to apply a different pre-assigned blending processing to the pixel data stored in said different memories (220, 230) for computing said blended pixel data, the applied blending processing depends on the memory (220, 230) storing the pixel data to be blended, and
each memory (220, 230) is provided with a storage capacity for data of two pixels.

2. Image processing apparatus in accordance with claim 1, wherein the number of said memories (220, 230) for storing pixel data to be processed by said processor (240) corresponds to the number of possible values of said $\alpha$-layer data (120).

3. Image processing apparatus in accordance with claim 1 or 2, further comprising a data bus (330) between said at least two memories (351, 352, 353, 354) and said selector (310).

4. Image processing apparatus in accordance with claim 3, wherein said data bus (330) has a width corresponding to a data amount of said two pixels to be processed.

5. Image processing apparatus in accordance with claim 3 or 4, wherein said data bus (330) has a width of 32 bit.

6. Image processing apparatus in accordance with claim 5, wherein data of each pixel comprising a green color value of 6 bit, a red color value and a blue color value of 5 bit each.

7. Image processing apparatus in accordance with any of claims 1 to 6, wherein said processor (340) is provided with a single storage means (350) subdivided into blocks (351, 352, 353, 354) representing the memories to which pixel data is output.

8. Image processing apparatus in accordance with claim 7, wherein said selector (310) comprises a controller (320) for outputting said pixel data to a specific address of said storage means (350) selected in accordance with said $\alpha$-layer data (120).

9. Image processing apparatus in accordance with claim 8, wherein said processor (340) being configured to apply said different processing to pixel data stored at different addresses of said storage means (350).

10. Image processing apparatus in accordance with any of claims 7 to 9, wherein said storage means (350) further comprising a result buffer (355) holding said computed blended pixel data.

11. Image processing apparatus in accordance with claim 10, wherein said result buffer is provided with a storage capacity corresponding to the data amount of a single blended pixel.

12. Image processing apparatus in accordance with any of claims 1 to 11, wherein said processor (240, 340) is implemented as a programmable logic device, in particular a field programmable gate array.

13. Image processing apparatus in accordance with any of claims 1 to 12, wherein said $\alpha$-layer (120) comprising a transparency data value for each pixel of one of said two image layers (110, 130).

14. Image processing apparatus in accordance with claim 13, wherein each transparency data value is represented by a 4 bit data value.

15. Image processing apparatus in accordance with any of claims 1 to 14, wherein said processor (240, 340) being configured to process said pixel data in accordance with a processing parameter varying in accordance with the different memories (220, 230, 351, 352, 353, 354).

**16.** Vehicle information and entertainment system including a display (190) and an image processing apparatus (200) in accordance with any of claims 1 to 15.

**17.** Vehicle information and entertainment system in accordance with claim 16, further comprising:

a microcontroller (310) for controlling said information and entertainment system, and
a program storage storing a software executable on said microcontroller (310) for implementing said selector.

**18.** Image processing method for computing blended pixel data from pixel data of two image layers in accordance with $\alpha$-layer data, said $\alpha$-layer data indicating a transparency of one of said image layers, said method comprising the step of: obtaining (steps 100) data of a pixel of each of said image layers and data of said $\alpha$-layer, **characterized by** the steps of
outputting (step s200) said obtained pixel data to one of at least two memories in accordance with said $\alpha$-layer data, such that for each different data of said $\alpha$-layer a different memory is selected, said memories being each provided with a storage capacity for data of two pixels, and
applying (step s300) a different pre-assigned blending processing to pixel data stored in said different memories of said at least two memories for computing said blended pixel data, the applied blending processing depending on the memory storing the pixel data to be blended.

**19.** Image processing method in accordance with claim 18, wherein the number of said memories for storing pixel data to be processed corresponds to the number of possible values of said $\alpha$-layer data.

**20.** Image processing method in accordance with claim 18 or 19, wherein said step of outputting (step s200) said pixel data further comprises the step of transmitting said pixel data to one of said memories via a data bus.

**21.** Image processing method in accordance with claim 20, wherein said data bus has a width corresponding to a data amount of said two pixels to be processed.

**22.** Image processing method in accordance with claim 20 or 21, wherein said data bus has a width of 32 bit.

**23.** Image processing method in accordance with claim 22, wherein data of each pixel comprising a green color value of 6 bit, a red color value and a blue color value of 5 bit each.

**24.** Image processing method in accordance with any of claims 18 to 23, wherein said memories to which pixel data is output are represented by blocks of a single storage means of a processor carrying out the computation of blending pixel data.

**25.** Image processing method in accordance with claim 24, wherein said step of outputting (step s200) said pixel data comprises the step of outputting said pixel data to a specific address of said storage means selected in accordance with said $\alpha$-layer data.

**26.** Image processing method in accordance with claim 25, wherein said step of applying (step s300) different processing comprises the step of applying said different processing to pixel data stored at different addresses of said storage means.

**27.** Image processing method in accordance with any of claims 24 to 26, further comprising the step of holding said computed blended pixel data in a result buffer of said storage means.

**28.** Image processing method in accordance with claim 27, wherein said result buffer is provided with a storage capacity corresponding to the data amount of a single blended pixel.

**29.** Image processing method in accordance with any of claims 18 to 28, wherein said computation of blending pixel data is carried out by a programmable logic device, in particular a field programmable gate array.

**30.** Image processing method in accordance with any of claims 18 to 29, wherein said $\alpha$-layer comprising a transparency data value for each pixel of one of said two image layers.

**31.** Image processing method in accordance with claim 30, wherein each transparency data value is represented by a 4 bit data value.

**32.** Image processing method in accordance with any of claims 18 to 31, wherein said step of applying (step s300) a different processing comprises the step of processing said pixel data in accordance with a processing parameter varying in accordance with the different memories.


**Patentansprüche**

**1.** Bildverarbeitungsvorrichtung zum Berechnen von vermischten Pixeldaten aus Pixeldaten von zwei Bildebenen (110, 130) in Übereinstimmung mit $\alpha$-Ebenen-Daten (120), wobei die $\alpha$-Ebenen-Daten (120) eine Transparenz von einer der Bildebenen (110, 130) angeben, umfassend:

mindestens zwei Speicher (220, 230), und
einen Prozessor (240), der konfiguriert ist, um eine unterschiedliche Mischverarbeitung auf in den verschiedenen Speichern (220, 230) gespeicherten Pixeldaten anzuwenden, um die vermischten Pixeldaten zu berechnen, **gekennzeichnet durch**
einen Selektor (210) zum Erhalten von Daten eines Pixels von jeder der Bildebenen (110, 130) und Daten der $\alpha$-Ebene (120) und Ausgeben der erhaltenen Pixeldaten an einen der mindestens zwei Speicher (220, 230) in Übereinstimmung mit den $\alpha$-Ebenen-Daten (120), sodass für alle unterschiedlichen Daten der $\alpha$-Ebene ein anderer Speicher (220, 230) ausgewählt wird, und dass
der Prozessor (240) konfiguriert ist, um eine unterschiedliche zuvor zugewiesene Mischverarbeitung auf die in den verschiedenen Speichern (220, 230) gespeicherten Pixeldaten anzuwenden, um die vermischten Pixeldaten zu berechnen, wobei die angewandte Mischverarbeitung von dem Speicher (220, 230) abhängt, der die zu vermischenden Pixeldaten speichert, und
jeder Speicher (220, 230) mit einer Speicherkapazität für Daten von zwei Pixeln bereitgestellt ist.

**2.** Bildverarbeitungsvorrichtung nach Anspruch 1, wobei die Anzahl der Speicher (220, 230) zum Speichern von durch den Prozessor (240) zu verarbeitenden Pixeldaten der Anzahl möglicher Werte der $\alpha$-Ebenen-Daten (120) entspricht.

**3.** Bildverarbeitungsvorrichtung nach Anspruch 1 oder 2, ferner umfassend einen Datenbus (330) zwischen den mindestens zwei Speichern (351, 352, 353, 354) und dem Selektor (310).

**4.** Bildverarbeitungsvorrichtung nach Anspruch 3, wobei der Datenbus (330) eine Breite aufweist, die einer Datenmenge der zwei zu verarbeitenden Pixeln entspricht.

**5.** Bildverarbeitungsvorrichtung nach Anspruch 3 oder 4, wobei der Datenbus (330) eine Breite von 32 Bit aufweist.

**6.** Bildverarbeitungsvorrichtung nach Anspruch 5, wobei Daten jedes Pixels einen grünen Farbwert von 6 Bit und einen roten Farbwert und einen blauen Farbwert von jeweils 5 Bit umfassen.

**7.** Bildverarbeitungsvorrichtung nach einem der Ansprüche 1 bis 6, wobei der Prozessor (340) mit einem einzelnen Speichermittel (350) bereitgestellt ist, das in Blöcke (351, 352, 353, 354) unterteilt ist, welche die Speicher darstellen, an die Pixeldaten ausgegeben werden.

**8.** Bildverarbeitungsvorrichtung nach Anspruch 7, wobei der Selektor (310) eine Steuerung (320) zum Ausgeben der Pixeldaten an eine spezifische Adresse des in Übereinstimmung mit den $\alpha$-Ebenen-Daten (120) ausgewählten Speichermittels (350) umfasst.

**9.** Bildverarbeitungsvorrichtung nach Anspruch 8, wobei der Prozessor (340) konfiguriert ist, um die unterschiedliche Verarbeitung auf an verschiedenen Adressen des Speichermittels (350) gespeicherten Pixeldaten anzuwenden.

**10.** Bildverarbeitungsvorrichtung nach einem der Ansprüche 7 bis 9, wobei das Speichermittel (350) ferner einen Ergebnispuffer (355) umfasst, der die berechneten vermischten Pixeldaten hält.

**11.** Bildverarbeitungsvorrichtung nach Anspruch 10, wobei der Ergebnispuffer mit einer Speicherkapazität bereitgestellt ist, die der Datenmenge eines einzelnen vermischten Pixels entspricht.

12. Bildverarbeitungsvorrichtung nach einem der Ansprüche 1 bis 11, wobei der Prozessor (240, 340) als eine programmierbare Logikvorrichtung ausgeführt ist, insbesondere ein feldprogrammierbares Gate-Array.

13. Bildverarbeitungsvorrichtung nach einem der Ansprüche 1 bis 12, wobei die $\alpha$-Ebene (120) einen Transparenzdatenwert für jedes Pixel von einer der zwei Bildebenen (110, 130) umfasst.

14. Bildverarbeitungsvorrichtung nach Anspruch 13, wobei jeder Transparenzdatenwert durch einen Datenwert von 4 Bit dargestellt ist.

15. Bildverarbeitungsvorrichtung nach einem der Ansprüche 1 bis 14, wobei der Prozessor (240, 340) konfiguriert ist, um die Pixeldaten in Übereinstimmung mit einem Verarbeitungsparameter zu verarbeiten, der in Übereinstimmung mit den verschiedenen Speichern (220, 230, 351, 352, 353, 354) variiert.

16. Fahrzeuginformations- und -unterhaltungssystem mit einer Anzeige (190) und einer Bildverarbeitungsvorrichtung (200) nach einem der Ansprüche 1 bis 15.

17. Fahrzeuginformations- und -unterhaltungssystem nach Anspruch 16, ferner umfassend:

eine Mikrosteuerung (310) zum Steuern des Informations- und -unterhaltungssystems, und
einen Programmspeicher, der eine Software speichert, die auf der Mikrosteuerung (310) ausführbar ist, um den Selektor umzusetzen.

18. Bildverarbeitungsverfahren zum Berechnen von vermischten Pixeldaten aus Pixeldaten von zwei Bildebenen in Übereinstimmung mit $\alpha$-Ebenen-Daten, wobei die $\alpha$-Ebenen-Daten eine Transparenz von einer der Bildebenen angeben, wobei das Verfahren den folgenden Schritt umfasst:

Erhalten (Schritt s100) von Daten von einem Pixel von jeder der Bildebenen und Daten von der $\alpha$-Ebene, **gekennzeichnet durch** die folgenden Schritte:

Ausgeben (Schritt s200) der erhaltenen Pixeldaten an einen von mindestens zwei Speichern in Übereinstimmung mit den $\alpha$-Ebenen-Daten, sodass für alle verschiedenen Daten der $\alpha$-Ebene ein anderer Speicher ausgewählt ist, wobei die Speicher jeweils mit einer Speicherkapazität für Daten von zwei Pixeln bereitgestellt sind, und
Anwenden (Schritt s300) einer unterschiedlichen zuvor zugewiesenen Mischverarbeitung auf in den verschiedenen Speichern der mindestens zwei Speicher gespeicherten Pixeldaten, um die vermischten Pixeldaten zu berechnen, wobei die angewandte Mischverarbeitung von dem Speicher abhängt, der die zu vermischenden Pixeldaten speichert.

19. Bildverarbeitungsverfahren nach Anspruch 18, wobei die Anzahl der Speicher zum Speichern von zu verarbeitenden Pixeldaten der Anzahl möglicher Werte der $\alpha$-Ebenen-Daten entspricht.

20. Bildverarbeitungsverfahren nach Anspruch 18 oder 19, wobei der Schritt des Ausgebens (Schritt s200) der Pixeldaten ferner den Schritt des Übertragens der Pixeldaten an einen der Speicher über einen Datenbus umfasst.

21. Bildverarbeitungsverfahren nach Anspruch 20, wobei der Datenbus eine Breite aufweist, die einer Datenmenge der zwei zu verarbeitenden Pixeln entspricht.

22. Bildverarbeitungsverfahren nach Anspruch 20 oder 21, wobei der Datenbus eine Breite von 32 Bit aufweist.

23. Bildverarbeitungsverfahren nach Anspruch 22, wobei Daten jedes Pixels einen grünen Farbwert von 6 Bit und einen roten Farbwert und einen blauen Farbwert von jeweils 5 Bit umfassen.

24. Bildverarbeitungsverfahren nach einem der Ansprüche 18 bis 23, wobei die Speicher, an die Pixeldaten ausgegeben werden, durch Blöcke eines einzelnen Speichermittels eines Prozessors, der die Berechnung der Vermischung von Pixeldaten ausführt, dargestellt sind.

25. Bildverarbeitungsverfahren nach Anspruch 24, wobei der Schritt des Ausgebens (Schritt s200) der Pixeldaten den Schritt des Ausgebens der Pixeldaten an eine spezifische Adresse des in Übereinstimmung mit den $\alpha$-Ebenen-

Daten ausgewählten Speichermittels umfasst.

26. Bildverarbeitungsverfahren nach Anspruch 25, wobei der Schritt des Anwendens (Schritt s300) einer unterschiedlichen Verarbeitung den Schritt des Anwendens der unterschiedlichen Verarbeitung auf Pixeldaten, die an verschiedenen Adressen des Speichermittels gespeichert sind, umfasst.

27. Bildverarbeitungsverfahren nach einem der Ansprüche 24 bis 26, ferner umfassend den Schritt des Haltens der berechneten vermischten Pixeldaten in einem Ergebnispuffer des Speichermittels.

28. Bildverarbeitungsverfahren nach Anspruch 27, wobei der Ergebnispuffer mit einer Speicherkapazität bereitgestellt ist, die der Datenmenge eines einzelnen vermischten Pixels entspricht.

29. Bildverarbeitungsverfahren nach einem der Ansprüche 18 bis 28, wobei die Berechnung der Vermischung von Pixeldaten von einer programmierbaren Logikvorrichtung durchgeführt wird, insbesondere einem feldprogrammierbaren Gate-Array.

30. Bildverarbeitungsverfahren nach einem der Ansprüche 18 bis 29, wobei die $\alpha$-Ebene einen Transparenzdatenwert für jedes Pixel von einer der zwei Bildebenen umfasst.

31. Bildverarbeitungsverfahren nach Anspruch 30, wobei jeder Transparenzdatenwert durch einen Datenwert von 4 Bit dargestellt ist.

32. Bildverarbeitungsverfahren nach einem der Ansprüche 18 bis 31, wobei der Schritt des Anwendens (Schritt s300) einer unterschiedlichen Verarbeitung den Schritt des Verarbeitens der Pixeldaten in Übereinstimmung mit einem Verarbeitungsparameter umfasst, der in Übereinstimmung mit den verschiedenen Speichern variiert.

**Revendications**

1. Appareil de traitement d'image destiné à calculer des données de pixels mélangées à partir de données de pixels de deux couches d'image (110, 130) conformément à des données de couche $\alpha$ (120), lesdites données de couche $\alpha$ (120) indiquant une transparence de l'une desdites couches d'image (110, 130), comprenant :

   au moins deux mémoires (220, 230), et
   un processeur (240) configuré pour appliquer un traitement de mélange différent aux données de pixels stockées dans lesdites différentes mémoires (220, 230) en vue de calculer lesdites données de pixels mélangées, **caractérisé par**
   un sélecteur (210) destiné à obtenir des données d'un pixel de chacune des couches d'image (110, 130) et des données de ladite couche $\alpha$ (120) et à transmettre lesdites données de pixels à l'une desdites au moins deux mémoires (220, 230) conformément auxdites données de couche $\alpha$ (120) de telle sorte que pour chaque donnée différente de ladite couche $\alpha$ une mémoire différente (220, 230) soit sélectionnée, et en ce que le processeur (240) est configuré pour appliquer un traitement de mélange pré-assigné différent aux données de pixels stockées dans lesdites mémoires différentes (220, 230) en vue de calculer lesdites données de pixels mélangées, le traitement de mélange appliqué dépendant de la mémoire (220, 230) stockant les données de pixel à mélanger, et chaque mémoire (220, 230) est fournie avec une capacité de stockage pour des données de deux pixels.

2. Appareil de traitement d'image selon la revendication 1, dans lequel le nombre desdites mémoires (220, 230) pour stocker des données de pixels à traiter par ledit processeur (240) correspond au nombre de valeurs possibles desdites données de couche $\alpha$ (120).

3. Appareil de traitement d'image selon la revendication 1 ou 2, comprenant en outre un bus de données (330) entre lesdites au moins deux mémoires (351, 352, 353, 354) et ledit sélecteur (310).

4. Appareil de traitement d'image selon la revendication 3, dans lequel ledit bus de données (330) a une largeur correspondant à une quantité de données desdits deux pixels à traiter.

5. Appareil de traitement d'image selon la revendication 3 ou 4, dans lequel ledit bus de données (330) a une largeur de 32 bits.

6. Appareil de traitement d'image selon la revendication 5, dans lequel les données de chaque pixel comprennent une valeur de couleur verte de 6 bits, une valeur de couleur rouge et une valeur de couleur bleue de 5 bits chacune.

7. Appareil de traitement d'image selon l'une quelconque des revendications 1 à 6, dans lequel ledit processeur (340) est pourvu d'un moyen de stockage unique (350) subdivisé en blocs (351, 352, 353, 354) représentant les mémoires auxquelles sont transmises les données de pixels.

8. Appareil de traitement d'image selon la revendication 7, dans lequel ledit sélecteur (310) comprend une unité de commande (320) pour transmettre lesdites données de pixels à une adresse spécifique dudit moyen de stockage (350) sélectionnée en fonction desdites données de couche $\alpha$ (120).

9. Appareil de traitement d'image selon la revendication 8, dans lequel ledit processeur (340) est configuré pour appliquer ledit traitement différent à des données de pixels stockées à des adresses différentes dudit moyen de stockage (350).

10. Appareil de traitement d'image selon l'une quelconque des revendications 7 à 9, dans lequel ledit moyen de stockage (350) comprend en outre un tampon de résultat (355) contenant lesdites données de pixels mélangées calculées.

11. Appareil de traitement d'image selon la revendication 10, dans lequel ledit tampon de résultat est pourvu d'une capacité de stockage correspondant à la quantité de données d'un seul pixel mélangé.

12. Appareil de traitement d'image selon l'une quelconque des revendications 1 à 11, dans lequel ledit processeur (240, 340) est mis en oeuvre en tant que dispositif logique programmable, en particulier en tant que circuit logique programmable in situ (Field Programmable Gate Array ou FGPA).

13. Appareil de traitement d'image selon l'une quelconque des revendications 1 à 12, dans lequel ladite couche $\alpha$ (120) comprend une valeur de données de transparence pour chaque pixel de l'une desdites deux couches d'image (110, 130).

14. Appareil de traitement d'image selon la revendication 13, dans lequel chaque valeur de données de transparence est représentée par une valeur de données de 4 bits.

15. Appareil de traitement d'image selon l'une quelconque des revendications 1 à 14, dans lequel ledit processeur (240, 340) est configuré pour traiter lesdites données de pixels en fonction d'un paramètre de traitement qui varie selon les différentes mémoires (220, 230, 351, 352, 353, 354).

16. Système d'information et de divertissement pour véhicule comprenant un écran (190) et un appareil de traitement d'image (200) selon l'une quelconque des revendications 1 à 15.

17. Système d'information et de divertissement pour véhicule selon la revendication 16, comprenant en outre :

un microcontrôleur (310) pour commander ledit système d'information et de divertissement, et
un stockage de programme stockant un logiciel exécutable sur ledit microcontrôleur (310) pour mettre en oeuvre ledit sélecteur.

18. Procédé de traitement d'image pour calculer des données de pixels mélangées à partir des données de pixels de deux couches d'image en fonction des données de couche $\alpha$, lesdites données de couche $\alpha$ indiquant une transparence de l'une desdites couches d'image, ledit procédé comprenant l'étape consistant à : obtenir (étape s100) des données d'un pixel de chacune desdites couches d'image et des données de ladite couche $\alpha$,
**caractérisé par** les étapes consistant à
transmettre (étape s200) lesdites données de pixels obtenues à l'une d'au moins deux mémoires en fonction desdites données de couche $\alpha$, de sorte que pour chaque donnée différente de ladite couche $\alpha$, une mémoire différente est sélectionnée, chacune desdites mémoires étant pourvue d'une capacité de stockage pour les données de deux pixels, et
appliquer (étape s300) un traitement de mélange pré-assigné différent aux données de pixels stockées dans lesdites mémoires différentes desdites au moins deux mémoires pour calculer lesdites données de pixels mélangées, le traitement de mélange appliqué dépendant de la mémoire stockant les données de pixels à mélanger.

**19.** Procédé de traitement d'image selon la revendication 18, dans lequel le nombre desdites mémoires pour stocker des données de pixels à traiter correspond au nombre de valeurs possibles desdites données de couche $\alpha$.

**20.** Procédé de traitement d'image selon la revendication 18 ou 19, dans lequel ladite étape de transmission (étape s200) desdites données de pixels comprend en outre l'étape consistant à transmettre lesdites données de pixels à l'une desdites mémoires via un bus de données.

**21.** Procédé de traitement d'image selon la revendication 20, dans lequel ledit bus de données a une largeur correspondant à une quantité de données desdits deux pixels à traiter.

**22.** Procédé de traitement d'image selon la revendication 20 ou 21, dans lequel ledit bus de données a une largeur de 32 bits.

**23.** Procédé de traitement d'image selon la revendication 22, dans lequel les données de chaque pixel comprennent une valeur de couleur verte de 6 bits, une valeur de couleur rouge et une valeur de couleur bleue de 5 bits chacune.

**24.** Procédé de traitement d'image selon l'une quelconque des revendications 18 à 23, dans lequel lesdites mémoires auxquelles sont transmises les données de pixels sont représentées par des blocs d'un moyen de stockage unique d'un processeur effectuant le calcul des données de pixels mélangées.

**25.** Procédé de traitement d'image selon la revendication 24, dans lequel ladite étape de transmission (étape s200) desdites données de pixels comprend l'étape consistant à transmettre lesdites données de pixels à une adresse spécifique dudit moyen de stockage sélectionnée en fonction desdites données de couche $\alpha$.

**26.** Procédé de traitement d'image selon la revendication 25, dans lequel ladite étape d'application (étape s300) d'un traitement différent comprend l'étape consistant à appliquer ledit traitement différent à des données de pixels stockées à des adresses différentes dudit moyen de stockage.

**27.** Procédé de traitement d'image selon l'une quelconque des revendications 24 à 26, comprenant en outre l'étape consistant à conserver lesdites données de pixels mélangées calculées dans un tampon de résultat dudit moyen de stockage.

**28.** Procédé de traitement d'image selon la revendication 27, dans lequel ledit tampon de résultat est pourvu d'une capacité de stockage correspondant à la quantité de données d'un seul pixel mélangé.

**29.** Procédé de traitement d'image selon l'une quelconque des revendications 18 à 28, dans lequel ledit calcul des données de pixels mélangées est effectué par un dispositif logique programmable, en particulier un circuit logique programmable in situ (Field Programmable Gate Array ou FGPA).

**30.** Procédé de traitement d'image selon l'une quelconque des revendications 18 à 29, dans lequel ladite couche $\alpha$ comprend une valeur de données de transparence pour chaque pixel de l'une desdites deux couches d'image.

**31.** Procédé de traitement d'image selon la revendication 30, dans lequel chaque valeur de données de transparence est représentée par une valeur de données de 4 bits.

**32.** Procédé de traitement d'image selon l'une quelconque des revendications 18 à 31, dans lequel ladite étape d'application (étape s300) d'un traitement différent comprend l'étape consistant à traiter lesdites données de pixels en fonction d'un paramètre de traitement qui varie selon les différentes mémoires.

**FIG. 1**

**FIG. 2**

**FIG. 3**

**FIG. 4**

**FIG. 5**

START

obtain pixel data from each of two
image layers and corresponding
transparency data

s100

output the pixel data to one of at
least two memories in accordance
with the transparency data

s200

apply different processing to pixel
data stored in different memories
for computing blended pixel data

s300

END

# FIG. 6

**EP 1 729 256 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0952546 A